# EUROPEAN PATENT APPLICATION

(11) **EP 4 349 490 A1**
(43) Date of publication of application: **10.04.2024**
(21) Application number: 22811103.5
(22) Date of filing: 25.04.2022
(51) Int. Cl.: B04B 5/12, C02F 1/38

(54) **SEPARATION DEVICE AND SEPARATION SYSTEM**

(30) Priority: 24.05.2021 JP 2021087266
(71) Applicant: Panasonic Intellectual Property Management Co., Ltd., Kadoma-shi, Osaka 571-0057 (JP)
(72) Inventor: TSURUI, Shota, Osaka 571-0057 (JP); KAMAKURA, Masanao, Osaka 571-0057 (JP); HAYASAKI, Yoshiki, Osaka 571-0057 (JP)
(74) Representative: SSM Sandmair
(86) International application number: PCT/JP2022/018662
(87) International publication number: WO 2022/249829

(57) **Abstract**

Separation device (1) includes bottomed casing (2), rotating body (3), and blade (4). Casing (2) includes outer tubular portion (5) and inner tubular portion (6). Rotating body (3) is disposed inside inner tubular portion (6) and rotates about a rotation axis along an axial direction of inner tubular portion (6). Blade (4) is disposed between inner tubular portion (6) and rotating body (3), and rotates together with rotating body (3). Inner tubular portion (6) includes inner inflow port (61) and discharge port (63). Discharge port (63) discharges a solid contained in a fluid flowing into an inside of inner tubular portion (6) through inner inflow port (61) between inner tubular portion (6) and outer tubular portion (5). Outer tubular portion (5) includes a fluid outflow port and a solid discharge portion. The fluid outflow port causes the fluid flowing out from the inside of inner tubular portion (6) and flowing into the inside of outer tubular portion (5) to flow out to the outside of outer tubular portion (5). The solid discharge portion discharges the solid discharged from discharge port (63) of inner tubular portion (6) to the outside of outer tubular portion (5).

## Description

### TECHNICAL FIELD

The present disclosure relates generally to a separation device and a separation system, and more particularly to a separation device that separates from a fluid a solid contained in the fluid, and a separation system including the separation device.

### BACKGROUND ART

PTL 1 discloses a centrifugal separator including a chemical injection device for injecting a chemical such as a flocculant into raw sludge, the flocculant being used to efficiently recover a solid content in solid-liquid separation of raw sludge in a sewage treatment plant, a wastewater treatment plant, or the like.

### Citation List

### Patent Literature

PTL 1: Unexamined Japanese Patent Publication No. 2000-254549

### SUMMARY OF THE INVENTION

Meanwhile, in developing countries and the like, development of water purification facilities and the like has not been progressing, and solid impurities may be contained in water used as domestic water, industrial water, agricultural water, and the like. Therefore, a technique for reducing an amount of impurities contained in water is desired, and improvement of a structure of a separator for improving separation performance is desired.

An object of the present disclosure is to provide a separation device and a separation system capable of improving separation performance for separating from a fluid a solid contained in the fluid.

A separation device according to one aspect of the present disclosure includes a bottomed casing, a rotating body, and a blade. The casing includes an outer tubular portion and an inner tubular portion disposed inside the outer tubular portion. The rotating body is disposed inside the inner tubular portion and is rotatable about a rotation axis along an axial direction of the inner tubular portion. The blade is disposed between the inner tubular portion and the rotating body, and rotates together with the rotating body. The inner tubular portion includes: an inner inflow port that allows an inside and an outside of the inner tubular portion to communicate with each other; and a discharge port that allows the inside and the outside of the inner tubular portion to communicate with each other and discharges a solid contained in a fluid flowing into the inside of the inner tubular portion through the inner inflow port between the inner tubular portion and the outer tubular portion. The outer tubular portion includes: a fluid outflow port that allows an inside and an outside of the outer tubular portion to communicate with each other and causes the fluid flowing out from the inside of the inner tubular portion and flowing into the inside of the outer tubular portion to flow out to the outside of the outer tubular portion; and a solid discharge portion that is separated from the fluid outflow port in the axial direction and discharges the solid discharged from the discharge port of the inner tubular portion to the outside of the outer tubular portion.

A separation system according to an aspect of the present disclosure includes the separation device and a drive device. The drive device rotationally drives the rotating body.

The separation device and the separation system of the present disclosure can improve separation performance for separating from a fluid a solid contained in the fluid.

### BRIEF DESCRIPTION OF THE DRAWINGS

Fig. 1 is a perspective view of a separation device according to an exemplary embodiment.
Fig. 2 is a transparent perspective view of the separation device.
Fig. 3 is a partially broken side view of the separation device.
Fig. 4 is a perspective view of a main part of the separation device.
Fig. 5 is a perspective view of another main part of the separation device.
Fig. 6 is a cross-sectional view of the separation device, the cross-sectional view corresponding to a cross section of an inner tubular portion taken along line VI-VI in Fig. 3.
Fig. 7 illustrates the separation device, and is a cross-sectional view corresponding to a cross section taken along line VII-VII of Fig. 3.
Fig. 8 is a schematic configuration diagram of a separation system including the separation device.
Fig. 9 is a diagram illustrating a simulation result of the separation performance of the separation device.
Fig. 10 is a transparent perspective view of a separation device according to Modification 1.
Fig. 11 is a perspective view of a main part of the separation device.
Fig. 12 is a perspective view of another main part of the separation device.

### DESCRIPTION OF EMBODIMENT

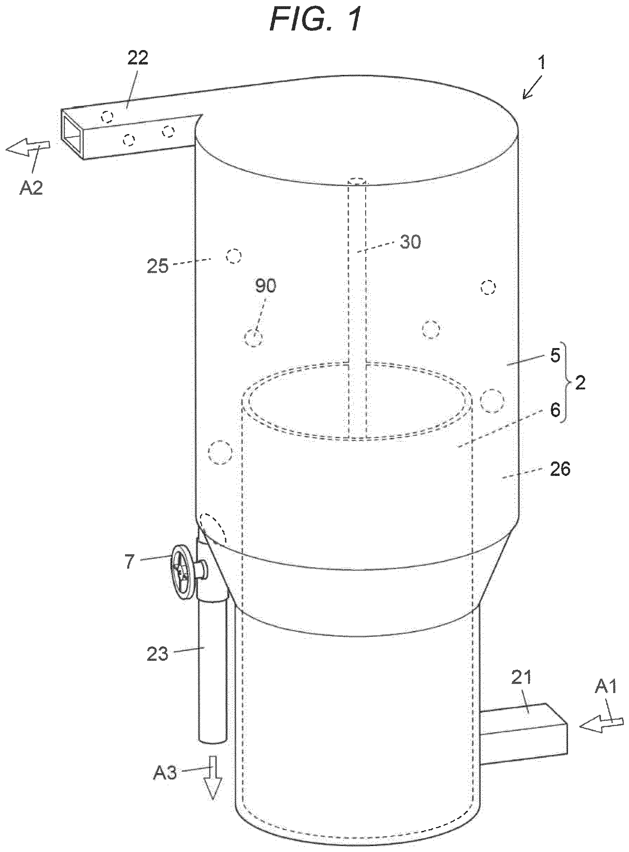

Figs. 1 to 7 and Figs. 10 to 12 described in the following exemplary embodiments and the like are schematic views, and ratios of sizes and thicknesses of respective components in the drawings do not necessarily reflect actual dimensional ratios.

### (1) Exemplary embodiments

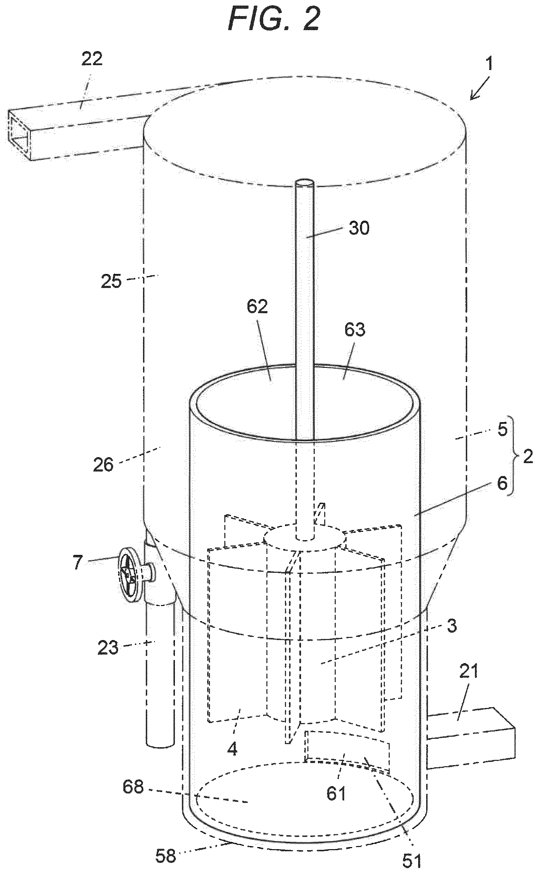

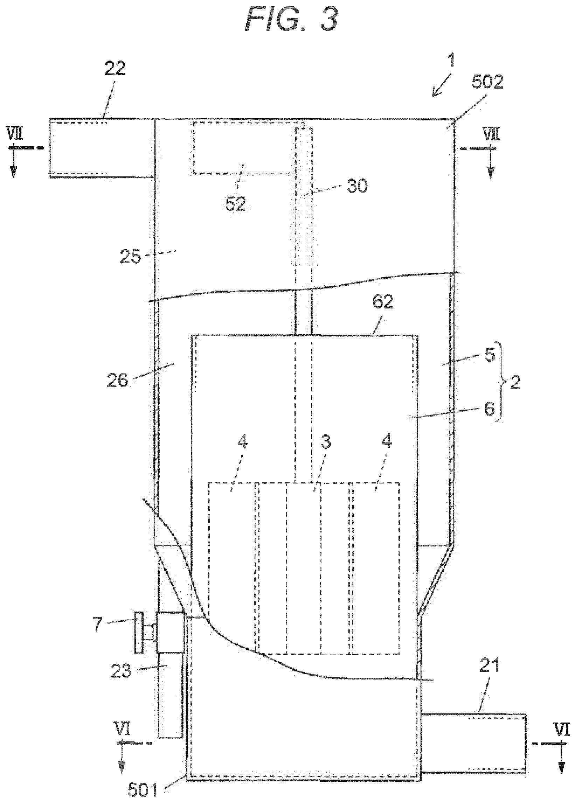

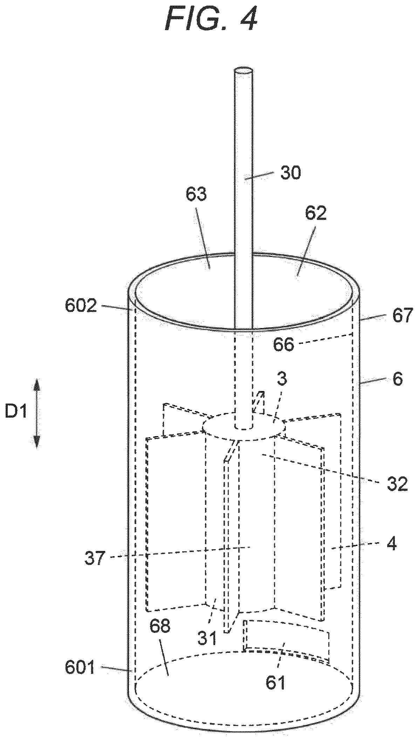

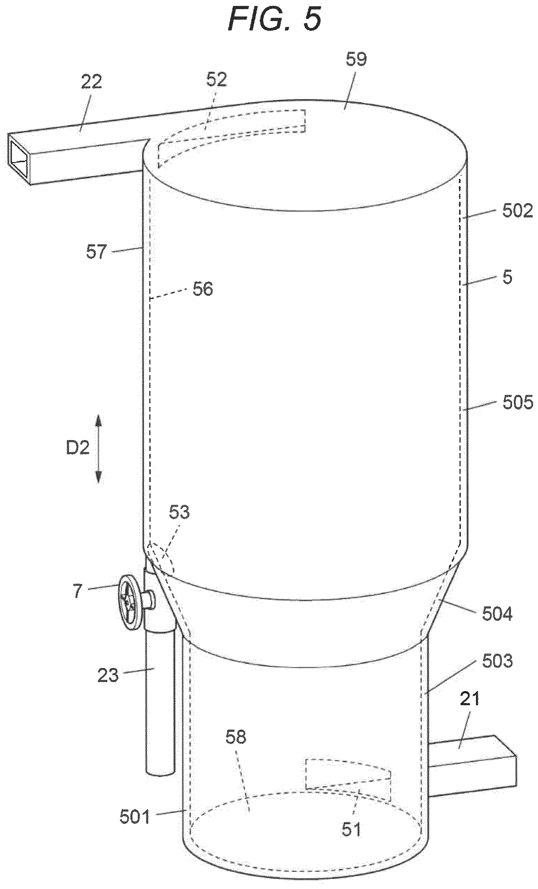

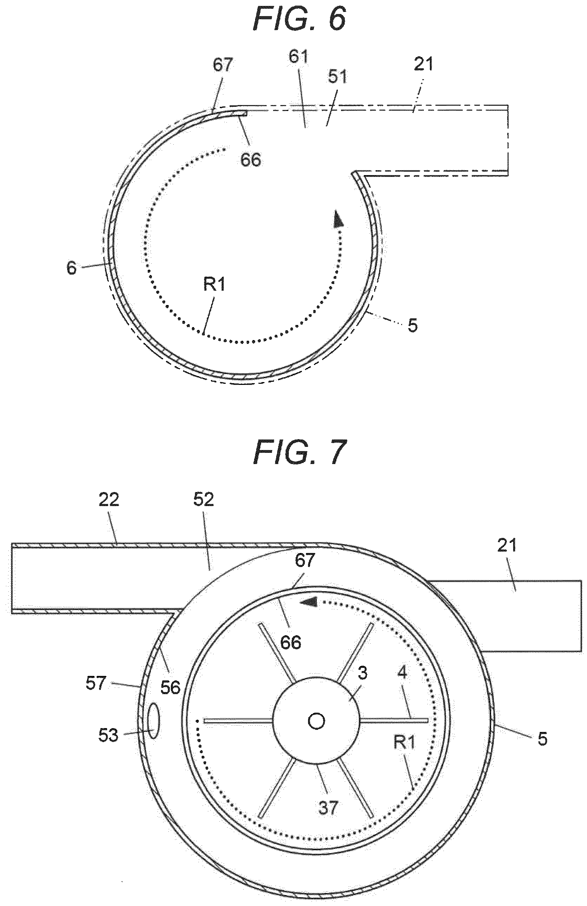

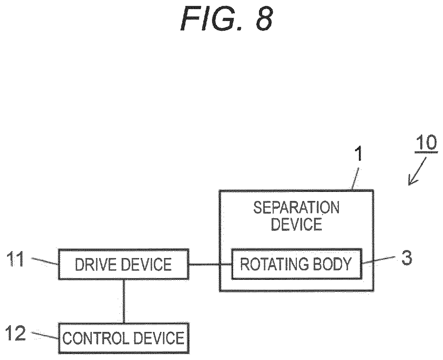

Hereinafter, separation device 1 according to an exemplary embodiment and separation system 10 including the same will be described with reference to Figs. 1 to 9. Fig. 1 is a perspective view of separation device 1 according to an exemplary embodiment. Fig. 2 is a transparent perspective view of separation device 1. Fig. 3 is a partially broken side view of separation device 1. Fig. 4 is a perspective view of a main part of separation device 1. Fig. 5 is a perspective view of another main part of separation device 1. Fig. 6 is a cross-sectional view of separation device 1 corresponding to a cross section of inner tubular portion 6 taken along line VI-VI in Fig. 3. Fig. 7 illustrates separation device 1, and is a cross-sectional view corresponding to a cross section taken along line VII-VII of Fig. 3. Fig. 8 is a schematic configuration diagram of separation system 10 including separation device 1.

### (1.1) Overview

Separation device 1 is a device that separates from a fluid a solid contained in the fluid. In the present exemplary embodiment, the fluid is a liquid, more particularly water. In the present exemplary embodiment, the solid to be separated by separation device 1 is impurities (particles and the like) contained in water.

Separation device 1 is provided, for example, in the middle of a tubular conduit (pipeline) for supplying water such as domestic water, and separates from a fluid solid 90 (see Fig. 1) such as impurities contained in the fluid (water). Separation device 1 may be used for separating impurities (solid 90) contained in domestic wastewater after being used as domestic water.

As illustrated in Figs. 1 to 7, separation device 1 includes casing 2, rotating body 3, and a blade 4.

As illustrated in Figs. 1 to 3, casing 2 includes outer tubular portion 5 and inner tubular portion 6. At least a part (all in the present exemplary embodiment) of inner tubular portion 6 is disposed inside outer tubular portion 5. Rotating body 3 is disposed inside inner tubular portion 6. Rotating body 3 is rotatable about a rotation axis. An axial direction of the rotation axis is along axial direction D 1 (see Fig. 4) of inner tubular portion 6. Blade 4 is disposed between inner tubular portion 6 and rotating body 3. Blade 4 rotates together with rotating body 3.

As illustrated in Fig. 4, inner tubular portion 6 includes inner inflow port 61 and discharge port 63.

Inner inflow port 61 connects an inner space of inner tubular portion 6 and an outer space of inner tubular portion 6. In other words, inner inflow port 61 allows an inside and an outside of inner tubular portion 6 to communicate with each other. Inner inflow port 61 is a hole for allowing a fluid (here, water) to flow from the outside to the inside of inner tubular portion 6.

Discharge port 63 connects the inner space of inner tubular portion 6 and the outer space of inner tubular portion 6. In other words, discharge port 63 allows the inside and the outside of inner tubular portion 6 to communicate with each other. Discharge port 63 is a hole for discharging solid 90 (impurities) contained in the fluid (water) flowing into inner tubular portion 6 to a space (recovery space 26; See Figs. 1 and 3.) between inner tubular portion 6 and outer tubular portion 5.

As illustrated in Fig. 5, outer tubular portion 5 includes fluid outflow port 52. Fluid outflow port 52 connects an inner space of outer tubular portion 5 and an outer space of outer tubular portion 5. In other words, fluid outflow port 52 allows an inside and an outside of outer tubular portion 5 to communicate with each other. As a result, fluid outflow port 52 allows an inside and an outside of casing 2 to communicate with each other. Fluid outflow port 52 is a hole for allowing the fluid (water) flowing out from the inside of inner tubular portion 6 and flowing into the inside of outer tubular portion 5 to flow out to the outside of outer tubular portion 5.

Outer tubular portion 5 further includes fluid inflow port 51. Fluid inflow port 51 connects the inner space of outer tubular portion 5 and the outer space of outer tubular portion 5. In other words, fluid inflow port 51 allows the inside and the outside of outer tubular portion 5 to communicate with each other. As a result, fluid inflow port 51 allows the inside and the outside of casing 2 to communicate with each other. Fluid inflow port 51 is a hole for allowing the fluid to flow from the outside to the inside of outer tubular portion 5.

As illustrated in Fig. 2, inner tubular portion 6 is disposed inside outer tubular portion 5 such that inner inflow port 61 is connected to fluid inflow port 51 of outer tubular portion 5. Therefore, the fluid flowing into outer tubular portion 5 from fluid inflow port 51 flows into inner tubular portion 6 through inner inflow port 61.

Separation device 1 generates in inner tubular portion 6 a fluid flow (water flow) swirling in inner tubular portion 6 when rotating body 3 rotates. As a result, separation device 1 generates in casing 2 a flow of the fluid swirling in casing 2 when rotating body 3 rotates.

Separation device 1 can flow the fluid (water) flowing into casing 2 from an upstream side to a downstream side while rotating the fluid spirally around rotating body 3. Here, the "upstream side" means an upstream side (primary side) as viewed in a fluid flow direction. Furthermore, the "downstream side" means a downstream side (secondary side) as viewed in the fluid flow direction. Separation device 1 is used in a state where fluid outflow port 52 of outer tubular portion 5 is located above fluid inflow port 51 in a vertical direction. In this case, in separation device 1, the fluid flowing into casing 2 from fluid inflow port 51 can be moved upward while being spirally rotated around rotating body 3 to flow into fluid outflow port 52.

As illustrated in Fig. 5, outer tubular portion 5 further includes solid discharge portion 53. Solid discharge portion 53 is a hole for discharging solid 90 discharged from discharge port 63 of inner tubular portion 6 to the outside of outer tubular portion 5. Solid discharge portion 53 connects the inner space of outer tubular portion 5 and the outer space of outer tubular portion 5. In other words, solid discharge portion 53 allows the inside and the outside of outer tubular portion 5 to communicate with each other. As a result, solid discharge portion 53 allows the inside and the outside of casing 2 to communicate with each other. Solid discharge portion 53 is separated from fluid outflow port 52 in axial direction D2 of outer tubular portion 5.

In separation device 1, at least a part of solid 90 (impurities) contained in the fluid (water) flowing into inner tubular portion 6 from fluid inflow port 51 through inner inflow port 61 is discharged from discharge port 63 to a space between inner tubular portion 6 and outer tubular portion 5 (recovery space 26). Furthermore, in separation device 1, solid 90 discharged between inner tubular portion 6 and outer tubular portion 5 (recovery space 26) can be discharged from solid discharge portion 53 to the outside of outer tubular portion 5 (the outside of casing 2).

Furthermore, in separation device 1, a centrifugal force can be applied to solid 90 contained in the fluid in inner tubular portion 6 by rotating blade 4 disposed in inner tubular portion 6. This makes it possible to improve the separation performance for separating solid 90 from the fluid.

As illustrated in Fig. 8, separation system 10 includes separation device 1 and drive device 11. In separation system 10, drive device 11 rotationally drives rotating body 3. That is, drive device 11 rotates rotating body 3 about the rotation axis. Drive device 11 includes, for example, a motor.

### (1.2) Details

As described above, separation device 1 includes casing 2, rotating body 3, and blade 4. Casing 2 includes outer tubular portion 5 and inner tubular portion 6. As illustrated in Fig. 2, entire inner tubular portion 6 is disposed in outer tubular portion 5.

As illustrated in Fig. 2, separation device 1 further includes inflow tubular portion 21, outflow tubular portion 22, discharge tubular portion 23, and opening and closing unit 7.

A material of outer tubular portion 5 is, for example, metal. However, the material of outer tubular portion 5 is not limited thereto, and may be resin (for example, polyethylene resin). Furthermore, outer tubular portion 5 may include a metal part made of metal and a resin part made of resin. As a material of outer tubular potion 5, for example, a material used as a material of a water pipe is appropriately used.

As illustrated in Figs. 5 and 7, outer tubular portion 5 has a circular inner peripheral shape. "Having a circular inner peripheral shape" means that a shape along an inner periphery of outer tubular portion 5 is a circular shape. A shape along an outer periphery of outer tubular portion 5 is a circular shape. Outer tubular portion 5 includes first end 501 and second end 502 in axial direction D2.

As illustrated in Fig. 5, casing 2 further includes first outer bottom 58 that closes an opening of first end 501 of outer tubular portion 5, and second outer bottom 59 that closes an opening of second end 502 of outer tubular portion 5. In separation device 1, outer tubular portion 5, first outer bottom 58, and second outer bottom 59 form a bottomed tubular member with both ends closed. Outer tubular portion 5, first outer bottom 58, and second outer bottom 59 constitute an outer shell of casing 2.

Separation device 1 is used in a state where axial direction D2 of outer tubular portion 5 is along the vertical direction, first end 501 faces downward, and second end 502 faces upward. Hereinafter, in the usage state of separation device 1, an upper side in the vertical direction may be referred to as "top", and a lower side in the vertical direction may be referred to as "bottom".

Outer tubular portion 5 integrally includes a first cylinder 503, an enlarged diameter portion 504, and a second cylinder 505. First cylinder 503, enlarged diameter portion 504, and second cylinder 505 are arranged in this order from first end 501 toward second end 502 in axial direction D2 of outer tubular portion 5. That is, first cylinder 503, enlarged diameter portion 504, and second cylinder 505 are arranged in this order from the bottom to the top.

An inner diameter and an outer diameter of first cylinder 503 are constant over the entire length of first cylinder 503 in axial direction D2 of outer tubular portion 5. An inner diameter and an outer diameter of second cylinder 505 are constant over the entire length of second cylinder 505 in axial direction D2 of outer tubular portion 5. The inner diameter of second cylinder 505 is larger than the inner diameter of first cylinder 503, and the outer diameter of second cylinder 505 is larger than the outer diameter of first cylinder 503. The inner diameter of second cylinder 505 is, for example, about 20 cm. However, the present invention is not limited thereto, and the inner diameter of second cylinder 505 is appropriately set according to the type of fluid, the type of solid 90 to be separated, desired separation performance, and the like.

Enlarged diameter portion 504 is located between first cylinder 503 and second cylinder 505 and connects first cylinder 503 and second cylinder 505. In enlarged diameter portion 504, an opening area gradually increases from an end portion on a side of first end 501 toward an end portion on a side of second end 502 in axial direction D2 of outer tubular portion 5.

An opening at a lower end of first cylinder 503 is closed by first outer bottom 58. An upper end of first cylinder 503 is connected to a lower end of enlarged diameter portion 504. An upper end of enlarged diameter portion 504 is connected to a lower end of second cylinder 505. An opening at an upper end of second cylinder 505 is closed by second outer bottom 59.

In separation device 1, although not particularly limited, for example, a length of a portion combining enlarged diameter portion 504 and second cylinder 505 (hereinafter, also referred to as "purification unit") in axial direction D1 is about 50 cm. However, the present invention is not limited thereto, and the length of the purification unit is appropriately set according to the type of fluid, the type of solid 90 to be separated, desired separation performance, and the like.

In outer tubular portion 5, fluid inflow port 51 allows the inside and the outside of outer tubular portion 5 to communicate with each other between first end 501 and second end 502 of outer tubular portion 5. Fluid inflow port 51 is formed in first cylinder 503. Fluid inflow port 51 is formed near first outer bottom 58 along one direction intersecting axial direction D2 of outer tubular portion 5. In other words, fluid inflow port 51 is opened to the side of outer tubular portion 5.

In outer tubular portion 5, fluid outflow port 52 is separated from fluid inflow port 51 in axial direction D2 of outer tubular portion 5, and allows the inside and outside of outer tubular portion 5 to communicate with each other between first end 501 and second end 502 of outer tubular portion 5. Fluid outflow port 52 is formed in second cylinder 505. Fluid outflow port 52 is formed near second outer bottom 59 along one direction intersecting axial direction D2 of outer tubular portion 5. In other words, fluid outflow port 52 is open to the side of outer tubular portion 5.

As illustrated in Figs. 5 and 6, inflow tubular portion 21 is connected to a peripheral edge of fluid inflow port 51 on outer peripheral surface 57 of outer tubular portion 5, for example. Inflow tubular portion 21 is a member for causing the fluid to flow into outer tubular portion 5. That is, inflow tubular portion 21 guides the fluid from the outside to the inside of casing 2. Inflow tubular portion 21 includes an internal space communicating with fluid inflow port 51 and protrudes from outer peripheral surface 57 of outer tubular portion 5. Inflow tubular portion 21 has a rectangular tubular shape. In inflow tubular portion 21, a portion protruding from outer peripheral surface 57 of outer tubular portion 5 has a rectangular opening on a side opposite to a side of fluid inflow port 51. Inflow tubular portion 21 protrudes in a direction along a tangential direction of inner peripheral surface 56 of outer tubular portion 5 as viewed in axial direction D2 of outer tubular portion 5 (See Fig. 6.).

As illustrated in Figs. 5 and 7, outflow tubular portion 22 is connected to a peripheral edge of fluid outflow port 52 on outer peripheral surface 57 of outer tubular portion 5, for example. Outflow tubular portion 22 is a member for supplying the fluid from which solid 90 is separated to the outside of outer tubular portion 5. Outflow tubular portion 22 includes an internal space communicating with fluid outflow port 52 and protrudes from outer peripheral surface 57 of outer tubular portion 5. Outflow tubular portion 22 has a rectangular tubular shape. In outflow tubular portion 22, a portion protruding from outer peripheral surface 57 of outer tubular portion 5 has a rectangular opening on a side opposite to a side of fluid outflow port 52. Outflow tubular portion 22 protrudes in a direction along a tangential direction of inner peripheral surface 56 of outer tubular portion 5 as viewed in axial direction D2 of outer tubular portion 5 (See Fig. 7.). In one specific example, outflow tubular portion 22 protrudes in a direction parallel to a protruding direction of inflow tubular portion 21 as viewed in axial direction D1.

A material of inner tubular portion 6 is, for example, metal. However, the material of inner tubular portion 6 is not limited thereto, and may be resin (for example, polyethylene resin). Furthermore, inner tubular portion 6 may include a metal portion formed of metal and a resin portion formed of resin. The material of inner tubular portion 6 may be the same as or different from the material of the outer tubular portion 5. As a material of inner tubular portion 6, for example, a material used as a material of a water pipe is appropriately used.

As illustrated in Fig. 4, inner tubular portion 6 has a circular inner peripheral shape. "Having a circular inner peripheral shape" means that a shape along an inner periphery of inner tubular portion 6 is a circular shape. A shape in a direction along an outer periphery of inner tubular portion 6 is circular.

Axial direction D1 of inner tubular portion 6 is along axial direction D2 of outer tubular portion 5. That is, inner tubular portion 6 is disposed inside outer tubular portion 5 such that axial direction D1 of inner tubular portion 6 is along axial direction D2 of outer tubular portion 5. In one specific example, axial direction D 1 of inner tubular portion 6 and axial direction D2 of outer tubular portion 5 are parallel to each other. More specifically, inner tubular portion 6 is disposed coaxially with outer tubular portion 5. The phrase "disposed coaxially with outer tubular portion 5" means that inner tubular portion 6 is disposed so as to align an axis of outer tubular portion 5 with an axis of inner tubular portion 6.

Inner tubular portion 6 includes first end 601 and second end 602 in axial direction D 1. An inner diameter and an outer diameter of inner tubular portion 6 are constant over the entire length of inner tubular portion 6 in axial direction D 1. In short, inner tubular portion 6 is cylindrical. The outer diameter of inner tubular portion 6 is substantially equal to an inner diameter of first cylinder 503 of outer tubular portion 5. The outer diameter of inner tubular portion 6 is smaller than an inner diameter of second cylinder 505 of outer tubular portion 5.

In axial direction D 1 of inner tubular portion 6, a length of inner tubular portion 6 is longer than a length of rotating body 3. Furthermore, in axial direction D1 of inner tubular portion 6, the length of inner tubular portion 6 is shorter than a length of outer tubular portion 5.

As illustrated in Fig. 4, casing 2 further includes inner bottom 68 that closes an opening of first end 601 of inner tubular portion 6. In separation device 1, inner tubular portion 6 and inner bottom 68 form a bottomed tubular member having one end opened. In inner tubular portion 6, an opening of second end 602 of inner tubular portion 6 forms discharge port 63. Discharge port 63 penetrates inner tubular portion 6 in axial direction D1.

Inner tubular portion 6 includes fluid flow port 62. Fluid flow port 62 connects the inner space of inner tubular portion 6 and the outer space of inner tubular portion 6. In other words, fluid flow port 62 allows the inside and the outside of inner tubular portion 6 to communicate with each other. In the present exemplary embodiment, an opening of second end 602 of inner tubular portion 6 forms fluid flow port 62. That is, in the present exemplary embodiment, the opening of second end 602 of inner tubular portion 6 serves as both fluid flow port 62 and discharge port 63.

In inner tubular portion 6, inner inflow port 61 allows the inside and the outside of inner tubular portion 6 to communicate with each other between first end 601 and second end 602 of inner tubular portion 6. Inner inflow port 61 is separated from discharge port 63 and fluid flow port 62 in axial direction D1 of inner tubular portion 6. Inner inflow port 61 is formed at a position near inner bottom 68 in inner tubular portion 6 along one direction intersecting axial direction D 1 of inner tubular portion 6. In other words, inner inflow port 61 is opened to the side of inner tubular portion 6.

Rotating body 3 is disposed inside inner tubular portion 6. Rotating body 3 is made of, for example, polycarbonate resin. Rotating body 3 is rotatable about a rotation axis along axial direction D1 of inner tubular portion 6. Rotating body 3 is disposed coaxially with inner tubular portion 6 inside inner tubular portion 6. The phrase "disposed coaxially with inner tubular portion 6" means that rotating body 3 is disposed so as to align a rotation axis of rotating body 3 with the central axis of inner tubular portion 6.

Rotating body 3 has, for example, a columnar shape having a constant diameter in axial direction D1 of inner tubular portion 6. Rotating body 3 includes first end 31 on a side of inner inflow port 61 and second end 32 on a side of fluid flow port 62. In a direction along the rotation axis of rotating body 3, a length of rotating body 3 is shorter than the length of inner tubular portion 6.

Rotating body 3 is disposed at a position overlapping a central portion of inner tubular portion 6 in axial direction D 1 of inner tubular portion 6.

Shaft 30 is connected to rotating body 3. Shaft 30 is disposed coaxially with rotating body 3. A motor of drive device 11 in separation system 10 is connected to shaft 30. The motor is disposed, for example, on the outside of casing 2, more particularly on an outer surface of second outer bottom 59. Note that illustration of the motor is omitted in each drawing.

Blade 4 is disposed between inner tubular portion 6 and rotating body 3, and rotates together with rotating body 3. In separation device 1, a plurality of (Here, six sheets are used.) the blades 4 are disposed between inner tubular portion 6 and rotating body 3. That is, separation device 1 includes the plurality of blades 4. The plurality of blades 4 are connected to rotating body 3 and separated from inner peripheral surface 66 of inner tubular portion 6. The plurality of blades 4 rotate together with rotating body 3.

The plurality of blades 4 are provided on rotating body 3 over the entire length of rotating body 3 in a direction along axial direction D 1 of inner tubular portion 6. That is, the plurality of blades 4 are provided from first end 31 to second end 32 of rotating body 3. A material of the plurality of blades 4 is, for example, polycarbonate resin. In separation device 1, the material of rotating body 3 and the material of the plurality of blades 4 are the same, but the present invention is not limited thereto, and they may be different. The plurality of blades 4 may be formed integrally with rotating body 3, or may be formed as a separate member from rotating body 3 and connected to rotating body 3 by being fixed to rotating body 3.

As illustrated in Fig. 7, each of the plurality of blades 4 is disposed such that a gap is formed between each blade 4 and inner tubular portion 6 as viewed in axial direction D1 of inner tubular portion 6. In other words, in separation device 1, there is a gap between each of the plurality of blades 4 and inner peripheral surface 66 of inner tubular portion 6. In a radial direction of rotating body 3, a distance between each protruding tip of the plurality of blades 4 and outer peripheral surface 37 of rotating body 3 is shorter than a distance between outer peripheral surface 37 of rotating body 3 and inner peripheral surface 66 of inner tubular portion 6.

Each of the plurality of blades 4 is disposed in parallel with the rotation axis of rotating body 3 in a space (flow path) between outer peripheral surface 37 of rotating body 3 and inner peripheral surface 66 of inner tubular portion 6. Each of the plurality of blades 4 has a flat plate shape. Each of the plurality of blades 4 has a quadrangular shape that is long in a direction along the rotation axis of rotating body 3 as viewed in a thickness direction. Each of the plurality of blades 4 forms an angle of 0 degrees with one radial direction of rotating body 3 when viewed from a side of inner bottom 68 in the direction along axial direction D1 of inner tubular portion 6. That is, the plurality of blades 4 extend radially from rotating body 3.

The plurality of blades 4 are arranged at equal angular intervals in a direction along an outer periphery of rotating body 3. The "equal angular intervals" mentioned herein are not limited to strictly the same angular intervals, and may be, for example, angular intervals within a predetermined error range (for example, ± 10% of a prescribed angular interval) with respect to a prescribed angular interval.

As illustrated in Fig. 4, in axial direction D 1 of inner tubular portion 6, a length of each of the plurality of blades 4 is the same as a length of rotating body 3. Here, the length of each of the plurality of blades 4 is not limited to the same as the length of rotating body 3, and may be longer or shorter than rotating body 3.

In axial direction D 1 of inner tubular portion 6, the length of each of the plurality of blades 4 is shorter than the length of inner tubular portion 6. In axial direction D1 of inner tubular portion 6, the entire plurality of blades 4 are arranged inside inner tubular portion 6.

Rotating body 3 and the plurality of blades 4 are at positions not overlapping inner inflow port 61 in a direction orthogonal to axial direction D1 of inner tubular portion 6.

As illustrated in Fig. 2, for example, inner tubular portion 6 is disposed inside outer tubular portion 5 such that a lower surface of inner bottom 68 is in contact with an upper surface of first outer bottom 58. That the lower surface of inner bottom 68 is in contact with the upper surface of first outer bottom 58 may mean that the lower surface of inner bottom 68 is in surface contact with the upper surface of first outer bottom 58, or may mean that the lower surface of inner bottom 68 is in partial contact with the upper surface of first outer bottom 58.

Inner inflow port 61 of inner tubular portion 6 communicates with fluid inflow port 51 of outer tubular portion 5 in a state where inner tubular portion 6 is disposed inside outer tubular portion 5.

In a state where inner tubular portion 6 is disposed inside outer tubular portion 5, second end 602 (upper end) of inner tubular portion 6, that is, fluid flow port 62 and discharge port 63 are at an intermediate position in axial direction D1 of second cylinder 505 of outer tubular portion 5. Therefore, there is no inner tubular portion 6 inside an upper half of second cylinder 505 of outer tubular portion 5 in axial direction D1. Therefore, outer tubular portion 5 includes space 25 on a side of fluid outflow port 52 with respect to second end 602 of inner tubular portion 6 in axial direction D2 of outer tubular portion 5. In separation device 1, fluid outflow port 52 is at a position overlapping space 25 in a direction orthogonal to axial direction D2 of outer tubular portion 5. Furthermore, in separation device 1, fluid outflow port 52 is at a position that does not overlap inner tubular portion 6 in a direction orthogonal to axial direction D2 of outer tubular portion 5. In other words, there is no inner tubular portion 6 in a projection region of fluid outflow port 52 when outer tubular portion 5 is viewed from the side.

In a state where inner tubular portion 6 is disposed inside outer tubular portion 5, an inner peripheral surface of first cylinder 503 of outer tubular portion 5 comes into contact with outer peripheral surface 67 of inner tubular portion 6 without any gap.

In a state where inner tubular portion 6 is disposed inside outer tubular portion 5, a gap (recovery space 26) is formed between inner tubular portion 6 and outer tubular portion 5. Recovery space 26 is a space sandwiched between outer peripheral surface 67 of inner tubular portion 6 and an inner peripheral surface of enlarged diameter portion 504 and an inner peripheral surface of second cylinder 505 in outer tubular portion 5 in a direction orthogonal to axial direction D2 of outer tubular portion 5.

Solid discharge portion 53 is provided in enlarged diameter portion 504 of outer tubular portion 5. Solid discharge portion 53 connects the inner space of outer tubular portion 5 and the outer space of outer tubular portion 5 via the inner space of solid discharge portion 53. Here, solid discharge portion 53 connects recovery space 26 in the inner space of outer tubular portion 5 and the outer space of outer tubular portion 5. Solid discharge portion 53 opens downward in the vertical direction.

In a direction along axial direction D2 of outer tubular portion 5, a distance between solid discharge portion 53 and fluid inflow port 51 is shorter than a distance between solid discharge portion 53 and fluid outflow port 52. In short, in the direction along axial direction D2 of outer tubular portion 5, a distance between solid discharge portion 53 and inflow tubular portion 21 is shorter than a distance between solid discharge portion 53 and fluid outflow port 52.

Discharge tubular portion 23 is connected to a peripheral edge of solid discharge portion 53 on outer peripheral surface 57 of outer tubular portion 5, for example. Discharge tubular portion 23 is a member for discharging solid 90 discharged to recovery space 26 to the outside of outer tubular portion 5. Discharge tubular portion 23 includes an internal space communicating with solid discharge portion 53 and protrudes from outer peripheral surface 57 of outer tubular portion 5. Discharge tubular portion 23 is cylindrical. In discharge tubular portion 23, an opening on a side opposite to a side of fluid outflow port 52 has a circular shape with respect to a portion protruding from outer peripheral surface 57 of outer tubular portion 5. Discharge tubular portion 23 protrudes in a direction along axial direction D2 of outer tubular portion 5. Discharge tubular portion 23 protrudes downward from solid discharge portion 53.

Opening and closing unit 7 opens and closes discharge tubular portion 23. In other words, opening and closing unit 7 opens and closes solid discharge portion 53. Opening and closing unit 7 is, for example, a valve provided in discharge tubular portion 23. The valve can take, for example, a closed state in which the fluid in outer tubular portion 5 is prevented from flowing out to the outside of outer tubular portion 5 through solid discharge portion 53 and discharge tubular portion 23, and an open state in which the fluid in outer tubular portion 5 is allowed to flow out to the outside of outer tubular portion 5 through solid discharge portion 53 and discharge tubular portion 23. The valve may be capable of variably adjusting a flow rate of the fluid passing through discharge tubular portion 23 in the open state. The valve is, for example, a manually operated valve that can be manually switched between a closed state and an open state by a user, but is not limited thereto, and may be a so-called electromagnetic valve in which the closed state and the open state are switched according to an appropriate electric signal.

As illustrated in Fig. 8, separation system 10 includes separation device 1 and drive device 11 that rotationally drives rotating body 3 of separation device 1. Drive device 11 includes, for example, a motor that rotationally drives the rotating body. Drive device 11 may directly or indirectly connect a rotating shaft of the motor to rotating body 3, or may transmit the rotation of the rotating shaft of the motor to rotating body 3 via a pulley and a rotating belt. The motor may be disposed inside casing 2 or may be disposed outside casing 2. A rotation speed of rotating body 3 rotationally driven by drive device 11 is, for example, 250 rpm to 1000 rpm.

Separation system 10 further includes control device 12 that controls drive device 11. Control device 12 includes a computer system. The computer system mainly includes a processor and a memory as hardware. A processor executes a program recorded in a memory of a computer system to implement a function as control device 12. The program may be recorded in advance in the memory of the computer system, may be provided through a telecommunication line, or may be provided by being recorded in a non-transitory recording medium such as a memory card, an optical disk, or a hard disk drive readable by the computer system. The processor of the computer system includes one or a plurality of electronic circuits including a semiconductor integrated circuit (IC) or a large-scale integrated (LSI) circuit. The integrated circuit such as an IC or an LSI mentioned here is called differently depending on a degree of integration, and includes integrated circuits called a system LSI, a very large scale integration (VLSI), or an ultra large scale integration (ULSI). Moreover, a field-programmable gate array (FPGA) programmed after manufacture of LSI, and a logical device capable of reconfiguring a joint relationship in LSI or reconfiguring circuit partitions in LSI can also be used as processors. The plurality of electronic circuits may be aggregated in one chip or may be provided in a distributed manner on a plurality of chips. The plurality of chips may be aggregated in one device or may be provided in a distributed manner in a plurality of devices. The computer system mentioned here includes a microcontroller having one or more processors and one or more memories. Therefore, the microcontroller also includes one or a plurality of electronic circuits including a semiconductor integrated circuit or a large scale integration.

### (1.3) Operation of separation device and separation system

In separation device 1 according to the exemplary embodiment, rotation direction R1 of rotating body 3 is, for example, a counterclockwise direction (See Figs. 6 and 7.) when rotating body 3 is viewed from a side of second outer bottom 59 in axial direction D2 of outer tubular portion 5. Separation system 10 rotationally drives rotating body 3 by drive device 11.

Separation device 1 is used, for example, when opening and closing unit 7 is closed.

In separation device 1, when rotating body 3 including blade 4 rotates, a force in a rotation direction around shaft 30 can be applied to the fluid in the inner space of inner tubular portion 6. In separation device 1, when rotating body 3 rotates, the plurality of the blades 4 rotate together with rotating body 3, and the speed vector of the fluid flowing in the inner space of inner tubular portion 6 has a speed component in a direction parallel to shaft 30 and a speed component in a rotation direction around shaft 30. In short, in separation device 1, rotating body 3 and blades 4 rotate to generate a flow of a fluid swirling in inner tubular portion 6. The swirling fluid flow is a three-dimensional spirally rotating flow. In short, in separation device 1, due to the rotation of rotating body 3 and each of blades 4, a flow of a fluid that spirally rotates while rising from inner inflow port 61 toward fluid flow port 62 is generated. Therefore, in separation device 1, due to the rotation of rotating body 3 and each of blades 4, a flow of the fluid that spirally rotates while rising from fluid inflow port 51 of outer tubular portion 5 toward fluid outflow port 52 is generated. As a result, the fluid flows from the outside of casing 2 toward the inner space of casing 2 through inflow tubular portion 21. Furthermore, the fluid flows out from the inner space of casing 2 toward the outside of casing 2 through outflow tubular portion 22. In Fig. 1, the flow of the fluid from the outside of casing 2 toward the inner space of casing 2 through inflow tubular portion 21 is schematically indicated by arrow A1. In Fig. 1, the flow of the fluid from the inner space of casing 2 toward the outside of casing 2 through outflow tubular portion 22 is schematically indicated by arrow A2.

In separation device 1, solid 90 contained in the fluid flowing into inner tubular portion 6 receives a centrifugal force in a direction from shaft 30 of rotating body 3 toward inner peripheral surface 66 of inner tubular portion 6 when rotating spirally in the inner space of inner tubular portion 6. Solid 90 subjected to the centrifugal force is likely to spiral toward inner peripheral surface 66 of inner tubular portion 6 and rotate in the vicinity of inner peripheral surface 66 of inner tubular portion 6 along inner peripheral surface 66. In separation device 1, solid 90 in the fluid is discharged from the inner space of inner tubular portion 6 to the outer space of inner tubular portion 6 (that is, space 25) through discharge port 63 (fluid flow port 62) at a position near inner peripheral surface 66 of inner tubular portion 6 in a direction orthogonal to axial direction D2.

Solid 90 discharged to space 25 through discharge port 63 settles into recovery space 26 between outer peripheral surface 67 of inner tubular portion 6 and inner peripheral surface 56 of outer tubular portion 5 by gravity acting on solid 90. The rotation speed of rotating body 3 is appropriately set so as to be a value at which solid 90 to be separated among solids 90 discharged from the inner space of inner tubular portion 6 to space 25 through discharge port 63 can settle in recovery space 26 against the momentum rising by the flow of the fluid in outer tubular portion 5. Solid 90 to be separated by separation device 1 is not particularly limited, and is, for example, particles having a particle size of about 10 µm.

Solid 90 that has settled in recovery space 26 passes through solid discharge portion 53 and is accumulated in the inner space of discharge tubular portion 23. Solid 90 accumulated in discharge tubular portion 23 is discharged to the outside of casing 2 through discharge tubular portion 23 of outer tubular portion 5 by making opening and closing unit 7 in an open state. For example, an administrator who manages separation system 10 may operate opening and closing unit 7 to discharge solid 90 at the time of periodic maintenance of separation system 10 or the like. In Fig. 1, the flow of the fluid containing solid 90 from the inner space of casing 2 toward the outside of casing 2 through discharge tubular portion 23 is schematically indicated by arrow A3.

In separation device 1, a part of solid 90 in the fluid (water) flowing into casing 2 from fluid inflow port 51 of outer tubular portion 5 is discharged through discharge port 63 and solid discharge portion 53, and a part of the fluid (purified water) from which solid 90 has been separated (removed) flows out from fluid outflow port 52 of outer tubular portion 5.

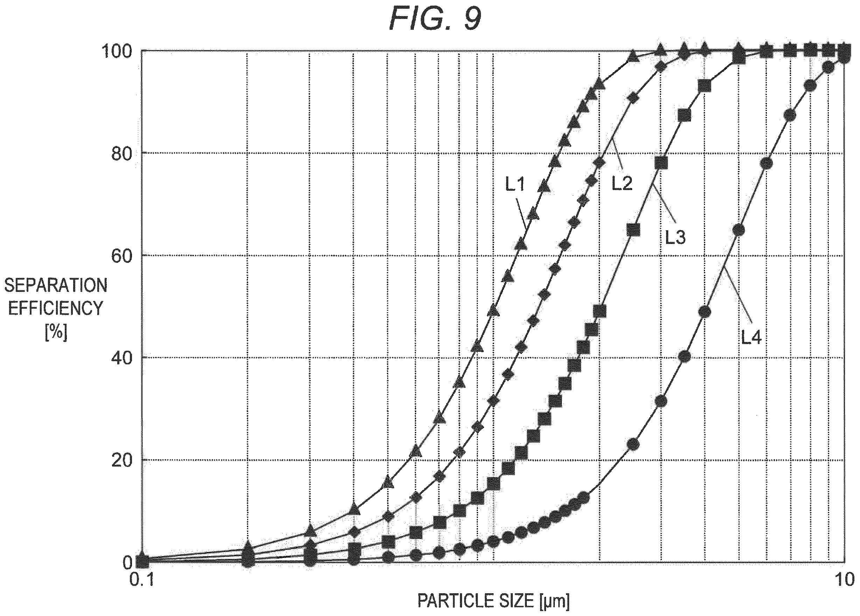

Fig. 9 is a graph illustrating a simulation result of separation characteristics in a case where the rotation speed of rotating body 3 is changed in separation device 1 according to the exemplary embodiment. In this simulation, the inner diameter of second cylinder 505 of outer tubular portion 5 is 20 cm, the length in axial direction D1 of the purification unit (the unit combining enlarged diameter portion 504 and second cylinder 505) of outer tubular portion 5 is 50 cm, and the flow rate of the fluid flowing into the inner space of casing 2 from fluid inflow port 51 is 5 L/min. Furthermore, in this simulation, water is assumed as the fluid.

A horizontal axis in Fig. 9 represents a particle size [µm] of solid 90 to be separated. In Fig. 9, a vertical axis represents a separation efficiency [%]. The separation efficiency here means a dust collection rate (ratio of collection amount of solid 90 to amount of solid 90 contained in fluid flowing into fluid inflow port 51). In Fig. 9, data plotted by triangles (line L1 connecting data) indicates separation characteristics when the rotation speed of rotating body 3 is 1000 rpm. Furthermore, in Fig. 9, data plotted by rhombuses (line L2 connecting data) indicates separation characteristics when the rotation speed of rotating body 3 is 750 rpm. In Fig. 9, data plotted by squares (line L3 connecting data) indicates separation characteristics when the rotation speed of rotating body 3 is 500 rpm. In Fig. 9, data plotted by circles (line L4 connecting data) indicates separation characteristics when the rotation speed of rotating body 3 is 250 rpm.

From Fig. 9, it can be seen that in separation device 1 according to the exemplary embodiment, solid 90 (particles) having a particle size of 10 µm can be separated from water with a separation efficiency close to 100% when the rotation speed of rotating body 3 is in a range of 250 rpm to 1000 rpm.

Furthermore, as can be seen from Fig. 9, regarding the separation characteristics of separation device 1, the separation efficiency tends to increase as the rotation speed of rotating body 3 increases. In separation device 1, for example, the rotation speed of rotating body 3 is preferably set so as to separate solid 90 having a specified particle size or more. As solid 90 having a specified particle size, for example, particles having a particle size of 10 µm are assumed. Solid 90 remaining in the fluid without being separated by separation device 1 includes, for example, fine particles (in other words, fine particles having a mass smaller than the mass of fine particles assumed to be separated by separation device 1) having a particle size smaller than a particle size of solid 90 assumed to be separated by separation device 1.

### (2) Modification

The exemplary embodiment described above is merely one of various exemplary embodiments of the present disclosure. Various modifications may be made to the exemplary embodiment to suit design or other requirements as long as the object of the present disclosure is fulfilled.

### (2.1) Modification 1

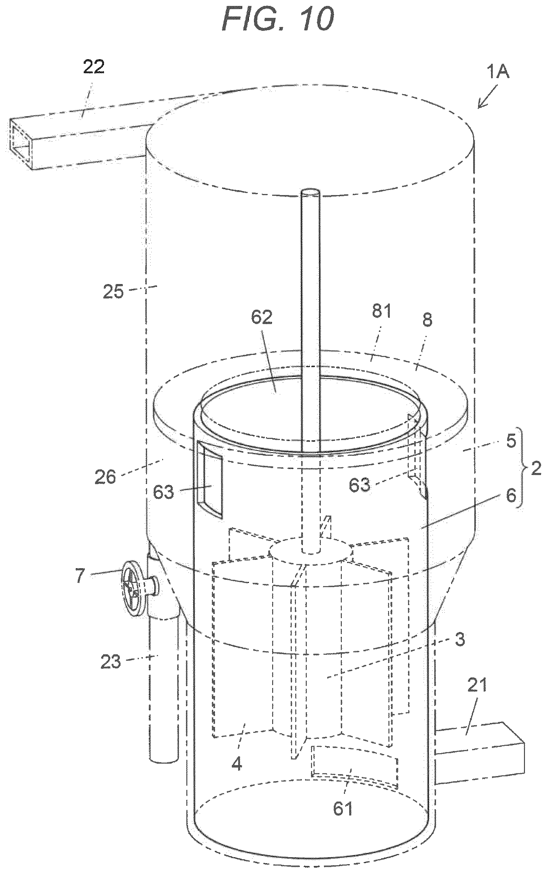

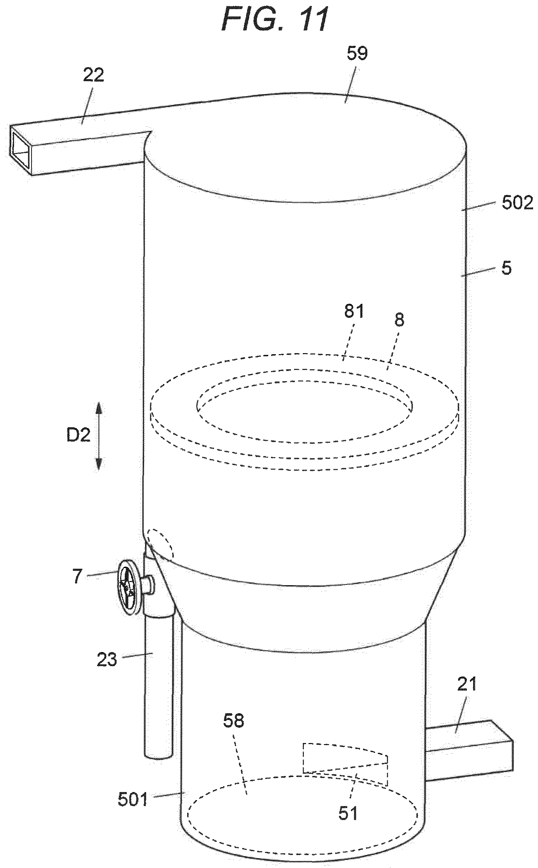

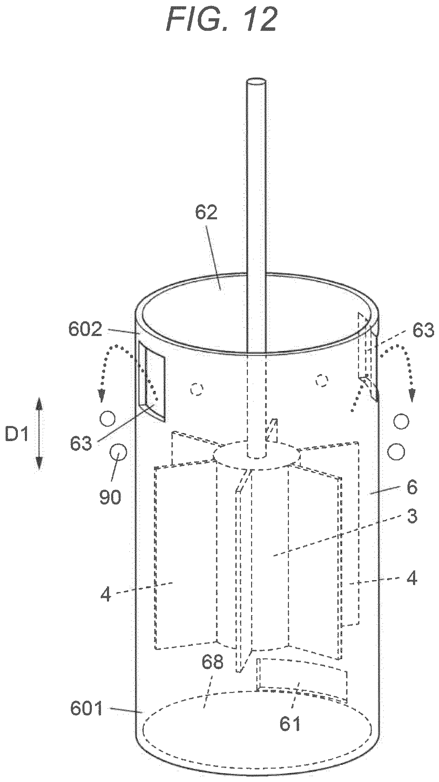

Fig. 10 is a transparent perspective view of separation device 1A according to Modification 1. Fig. 11 is a perspective view of a main part of separation device 1A. Fig. 12 is a perspective view of another main part of separation device 1A. As illustrated in Figs. 10 to 12, separation device 1A of the present modification is different from separation device 1 of the exemplary embodiment in that discharge port 63 is formed in inner tubular portion 6 separately from fluid flow port 62. Furthermore, separation device 1A of the present modification is different from separation device 1 of the exemplary embodiment in further including prevention unit 8. In separation device 1A according to the present modification, the same components as those of separation device 1 according to the exemplary embodiment are denoted by the same reference marks, and the description thereof will be appropriately omitted.

In separation device 1A of the present modification, discharge port 63 is separated from fluid flow port 62 in axial direction D1 of inner tubular portion 6. Discharge port 63 allows the inside and the outside of inner tubular portion 6 to communicate with each other between first end 601 and second end 602 of inner tubular portion 6. Here, discharge port 63 is a slit extending along axial direction D1 of inner tubular portion 6. In the present modification, two slit-shaped discharge ports 63 are formed in inner tubular portion 6. Note that, in Figs. 10 and 12, discharge port 63 is illustrated as a wide opening for convenience of description. On the other hand, fluid flow port 62 is formed by an opening of second end 602 of inner tubular portion 6, similarly to separation device 1 of the exemplary embodiment.

In separation device 1A of the present modification, when rotating body 3 is rotated, the fluid flows into inner tubular portion 6. Then, solid 90 contained in the fluid flowing into inner tubular portion 6 receives a centrifugal force in a direction from rotation central axis 30 of rotating body 3 toward inner peripheral surface 66 of inner tubular portion 6 when rotating spirally in the inner space of inner tubular portion 6. Solid 90 subjected to the centrifugal force is likely to spiral toward inner peripheral surface 66 of inner tubular portion 6 and rotate in the vicinity of inner peripheral surface 66 of inner tubular portion 6 along inner peripheral surface 66. Then, in separation device 1A, a part of solid 90 in the fluid passes through discharge port 63 in the middle of passing through the inner space of inner tubular portion 6 and is discharged from inner tubular portion 6 to recovery space 26 between inner tubular portion 6 and outer tubular portion 5.

In separation device 1A, a part of solid 90 in the fluid flowing into inner tubular portion 6 from inner inflow port 61 of inner tubular portion 6 is discharged from inner tubular portion 6 through discharge port 63, and a part of the fluid (purified water) from which solid 90 has been separated (removed) flows out from fluid flow port 62 of inner tubular portion 6 to the inner space of outer tubular portion 5.

Prevention unit 8 prevents solid 90 discharged from discharge port 63 to a space between inner tubular portion 6 and outer tubular portion 5 (recovery space 26) from moving toward fluid outflow port 52 of outer tubular portion 5. In the present modification, prevention unit 8 includes partition plate 81. Partition plate 81 is disposed at a position between inner tubular portion 6 and outer tubular portion 5 as viewed in axial direction D2 of outer tubular portion 5, and at a position between fluid flow port 62 and discharge port 63 of inner tubular portion 6 in axial direction D1.

Partition plate 81 is a ring-shaped disk. An inner diameter of partition plate 81 is substantially equal to an inner diameter of inner tubular portion 6. An outer diameter of partition plate 81 is substantially equal to an inner diameter of second cylinder 505 of outer tubular portion 5. Partition plate 81 is disposed such that an inner peripheral edge portion of a lower surface thereof is in contact with an upper end surface of inner tubular portion 6. As a result, partition plate 81 separates space 25 and recovery space 26.

In separation device 1A, since discharge port 63 is formed separately from fluid flow port 62, at least a part of solid 90 is discharged to recovery space 26 through discharge port 63 while passing through the inner space of inner tubular portion 6. As a result, even solid 90 having a small mass and hardly settles is easily discharged to recovery space 26. Therefore, according to separation device 1A, it is possible to improve the discharge efficiency of solid 90 from inner tubular portion 6. As a result, it is possible to further improve the separation performance for separating from the fluid solid 90 contained in the fluid.

Furthermore, since separation device 1A includes prevention unit 8 (partition plate 81), it is possible to prevent solid 90 once discharged into recovery space 26 from flowing into space 25. This makes it possible to further improve the separation performance for separating from the fluid solid 90 contained in the fluid.

Note that, although partition plate 81 separates space 25 and recovery space 26 without a gap, the present invention is not limited thereto, and for example, a gap connecting space 25 and recovery space 26 may be formed by making an outer diameter of partition plate 81 slightly smaller than an inner diameter of second cylinder 505 or forming a hole in partition plate 81. The gap preferably has a shape and a size in which the fluid hardly flows in a direction from recovery space 26 toward space 25.

### (2.2) Other modifications

In a modification, separation devices 1 and 1A may not include opening and closing unit 7. In this case, when rotating body 3 is rotated, the fluid flows into casing 2 from fluid inflow port 51. Then, a part of the fluid flowing into casing 2 flows out from fluid outflow port 52, and the rest is discharged from solid discharge portion 53 together with solid 90.

In a modification, casing 2 may not include inner bottom 68. In this case, inner tubular portion 6 only needs to be present at a position overlapping a part of second cylinder 505 and enlarged diameter portion 504 in a direction orthogonal to axial direction D1, and may not be present at a position overlapping first cylinder 503.

In a modification, inner tubular portion 6 and outer tubular portion 5 may be integrally formed.

In a modification, second end 602 (upper end) of inner tubular portion 6 may not be located at an intermediate position in axial direction D1 of second cylinder 505 of outer tubular portion 5, and may be located closer to second end 502 (lower side) than the position of fluid outflow port 52 in outer tubular portion 5.

In a modification, outer tubular portion 5 may not include entire first cylinder 503 or at least the lower half (the portion including fluid inflow port 51). In this case, a portion including inner inflow port 61 in inner tubular portion 6 constitutes a part of the outer shell of casing 2. In this case, inflow tubular portion 21 may be connected to a peripheral edge of inner inflow port 61 on outer peripheral surface 67 of inner tubular portion 6. In this case, outer tubular portion 5 does not include fluid inflow port 51, and inner inflow port 61 of inner tubular portion 6 also serves as fluid inflow port 51.

In a modification, at least one of the inner diameter and the outer diameter of first cylinder 503 of outer tubular portion 5 may not be constant. At least one of the inner diameter and the outer diameter of first cylinder 503 may gradually increase or gradually decrease in axial direction D2 of outer tubular portion 5.

In a modification, at least one of the inner diameter and the outer diameter of second cylinder 505 of outer tubular portion 5 may not be constant. At least one of the inner diameter and the outer diameter of second cylinder 505 may gradually increase or gradually decrease in axial direction D2 of outer tubular portion 5.

In a modification, the number of discharge ports 63 provided in inner tubular portion 6 is not limited to one or two, and may be three or more.

In a modification, at least one of the inner diameter and the outer diameter of inner tubular portion 6 may not be constant. At least one of the inner diameter and the outer diameter of inner tubular portion 6 may gradually increase or gradually decrease in axial direction D1 of inner tubular portion 6.

In a modification, solid discharge portion 53 (discharge tubular portion 23) may be connected to fluid inflow port 51 (inflow tubular portion 21) via an appropriate bypass path.

In a modification, inflow tubular portion 21 is not limited to a rectangular tubular shape, and may have another shape such as a cylindrical shape.

In a modification, outflow tubular portion 22 is not limited to a rectangular tubular shape, and may have another shape such as a cylindrical shape.

In a modification, the shape of rotating body 3 is not limited to a columnar shape, and may be another shape. For example, rotating body 3 may have a truncated cone shape whose diameter gradually increases from a side of first end 31 toward a side of second end 32. In this case, by rotating rotating body 3, the side of second end 32 is easily caused to have a negative pressure (a pressure smaller than the side of first end 31) in the space around rotating body 3, and the fluid is easily drawn into casing 2.

In a modification, each of the plurality of blades 4 may be inclined by a predetermined angle (for example, 45 degrees) with respect to one radial direction of rotating body 3. In this case, in each of the plurality of blades 4, a distal end on a side of inner tubular portion 6 in the protruding direction from rotating body 3 may be located behind a proximal end on a side of rotating body 3 in rotation direction R1 of rotating body 3 (See Figs. 4 and 5.). Alternatively, in each of the plurality of blades 4, the distal end on the side of inner tubular portion 6 in the protruding direction from rotating body 3 may be located in front of the proximal end on side of rotating body 3 in rotation direction R1 of rotating body 3. That is, each of the plurality of blades 4 may be inclined by a predetermined angle (for example, 45 degrees) in rotation direction R1 of rotating body 3 with respect to one radial direction of rotating body 3. The predetermined angle is not limited to 45 degrees, and may be an angle larger than 0 degrees and 90 degrees or less. For example, the predetermined angle may be an angle within a range of 10 degrees or more and 80 degrees or less.

In a modification, each of the plurality of blades 4 may have a shape including one or more curved portions such as an arc shape.

In a modification, each of the plurality of blades 4 may be formed in a spiral shape around shaft 30 of rotating body 3. Here, the "spiral shape" is not limited to a spiral shape having one or more rotation speeds, and includes a partial shape of a spiral shape having one rotation speed.

In a modification, the fluid flowing into casing 2 from fluid inflow port 51 is not limited to water, and may be a liquid other than water or a gas such as air.

In a modification of separation device 1A, discharge port 63 may not have a slit shape, and may have an appropriate shape such as a circular shape or a polygonal shape.

In a modification of separation device 1A, discharge port 63 may be connected to fluid flow port 62 (the opening on a side of second end 602 of inner tubular portion 6). For example, discharge port 63 may have a slit shape extending along axial direction D2 from the peripheral edge of fluid flow port 62.

### (3) Aspects

As is apparent from the above-described exemplary embodiment and modifications, the following aspects are disclosed in the present specification.

Separation device (1; 1A) of a first aspect includes bottomed casing (2), rotating body (3), and blade (4). Casing (2) includes outer tubular portion (5) and inner tubular portion (6) disposed inside outer tubular portion (5). Rotating body (3) is disposed inside inner tubular portion (6). Rotating body (3) is rotatable about a rotation axis along axial direction (D1) of inner tubular portion (6). Blade (4) is disposed between inner tubular portion (6) and rotating body (3). Blade (4) rotates together with rotating body (3). Inner tubular portion (6) includes inner inflow port (61) and discharge port (63). Inner inflow port (61) allows an inside and an outside of inner tubular portion (6) to communicate with each other. Discharge port (63) allows the inside and the outside of inner tubular portion (6) to communicate with each other. Discharge port (63) discharges solid (90) contained in a fluid flowing into the inside of inner tubular portion (6) through inner inflow port (61) between inner tubular portion (6) and outer tubular portion (5). Outer tubular portion (5) includes fluid outflow port (52) and solid discharge portion (53). Fluid outflow port (52) allows an inside and an outside of outer tubular portion (5) to communicate with each other. Fluid outflow port (52) causes the fluid flowing out from the inside of inner tubular portion (6) and flowing into the inside of outer tubular portion (5) to flow out to the outside of outer tubular portion (5). Solid discharge portion (53) is spaced apart from fluid outflow port (52) in axial direction (D1). Solid discharge portion (53) discharges solid (90) discharged from discharge port (63) of inner tubular portion (6) to the outside of outer tubular portion (5).

According to this aspect, it is possible to improve separation performance for separating from the fluid solid (90) contained in the fluid.

Separation device (1; 1A) of a second aspect, in the first aspect, further includes opening and closing unit (7) that opens and closes solid discharge portion (53).

According to this aspect, solid (90) can be recovered at a desired timing.

In separation device (1A) of a third aspect, in the first aspect or second aspect, discharge port (63) is a slit formed in inner tubular portion (6).

According to this aspect, it is possible to improve the separation performance.

In separation device (1; 1A) of a fourth aspect, in any one of the first aspect to the third aspect, inner tubular portion (6) further includes fluid flow port (62). Fluid flow port (62) is separated from discharge port (63) and inner inflow port (61) in axial direction (D1). Fluid flow port (62) allows the inside and the outside of inner tubular portion (6) to communicate with each other. Fluid flow port (62) causes the fluid flowing into the inside of inner tubular portion (6) to flow out to the outside of inner tubular portion (6) and the inside of outer tubular portion (5).

According to this aspect, it is possible to improve the separation performance.

Separation device (1A) of a fifth aspect, in the fourth aspect, further includes prevention unit (8). Prevention unit (8) prevents solid (90) discharged from discharge port (63) between inner tubular portion (6) and outer tubular portion (5) from flowing toward fluid outflow port (52).

According to this aspect, solid (90) discharged from discharge port (63) can be prevented from flowing into fluid outflow port (52), and the separation performance can be improved.

In separation device (1A) of a sixth aspect, in the fifth aspect, prevention unit (8) includes partition plate (81). Partition plate (81) is disposed at a position between inner tubular portion (6) and outer tubular portion (5) as viewed in axial direction (D1), and at a position between fluid flow port (62) and discharge port (63) of inner tubular portion (6) the axial direction (D 1).

According to this aspect, solid (90) discharged from discharge port (63) can be prevented from flowing into fluid outflow port (52), and the separation performance can be improved.

Separation device (1; 1A) of a seventh aspect, in any one of the first aspect to the sixth aspect, further includes inflow tubular portion (21). Inflow tubular portion (21) guides the fluid from an outside to an inside of casing (2).

According to this aspect, it is possible to guide the fluid into casing (2) through inflow tubular portion (21).

In separation device (1; 1A) according to an eighth aspect, in the seventh aspect, outer tubular portion (5) has a bottomed cylindrical shape having a circular inner peripheral shape. Inflow tubular portion (21) protrudes in a direction along a tangential direction of an inner peripheral surface of outer tubular portion (5) as viewed in axial direction (D1).

According to this aspect, it is possible to guide the fluid into casing (2) through inflow tubular portion (21).

In separation device (1; 1A) according to a ninth aspect, in the seventh aspect or eighth aspect, a distance between solid discharge portion (53) and inflow tubular portion (21) is shorter than a distance between solid discharge portion (53) and fluid outflow port (52) in a direction along axial direction (D1).

According to this aspect, it is possible to improve the separation performance.

Separation device (1; 1A) according to a tenth aspect, in any one of the first aspect to the ninth aspect, further includes outflow tubular portion (22). Outflow tubular portion (22) includes an internal space communicating with fluid outflow port (52) and protrudes from an outer peripheral surface of outer tubular portion (5).

According to this aspect, the fluid from which solid (90) is separated easily flows through fluid outflow port (52) and outflow tubular portion (22).

Separation system (10) of an eleventh aspect further includes separation device (1; 1A) in any one of the first aspect to the tenth aspect and drive device (11) that rotationally drive rotating body (3).

According to this aspect, it is possible to improve the separation performance.

### INDUSTRIAL APPLICABILITY

The separation device and the separation system of the present disclosure can improve separation performance for separating from a fluid a solid contained in the fluid. As a result, an amount of impurities contained in domestic water, industrial water, agricultural water, and the like can be reduced. That is, the separation device and the separation system of the present disclosure are industrially useful.

### REFERENCE MARKS IN THE DRAWINGS

- 1, 1A: separation device
- 2: casing
- 21: inflow tubular portion
- 22: outflow tubular portion
- 3: rotating body
- 4: blade
- 5: outer tubular portion
- 52: fluid outflow port
- 53: solid discharge port
- 6: inner tubular portion
- 61: inner inflow port
- 62: fluid flow port
- 63: discharge port
- 7: opening and closing unit
- 8: prevention unit
- 81: partition plate
- 90: solid
- 10: separation system
- 11: drive device
- D1, D2: axial direction

## Claims

1. A separation device comprising:
a bottomed casing including an outer tubular portion and an inner tubular portion disposed inside the outer tubular portion;
a rotating body disposed inside the inner tubular portion, the rotating body being rotatable about a rotation axis along an axial direction of the inner tubular portion; and
a blade that is disposed between the inner tubular portion and the rotating body and rotates together with the rotating body,
wherein
the inner tubular portion includes
an inner inflow port that allows an inside and an outside of the inner tubular portion to communicate with each other, and
a discharge port that allows the inside and the outside of the inner tubular portion to communicate with each other and discharges a solid contained in a fluid flowing into the inside of the inner tubular portion through the inner inflow port between the inner tubular portion and the outer tubular portion, and
the outer tubular portion includes
a fluid outflow port that allows an inside and an outside of the outer tubular portion to communicate with each other and causes the fluid flowing out from the inside of the inner tubular portion and flowing into the inside of the outer tubular portion to flow out to the outside of the outer tubular portion, and
a solid discharge portion that is separated from the fluid outflow port in the axial direction and discharges the solid discharged from the discharge port of the inner tubular portion to the outside of the outer tubular portion.

2. The separation device according to Claim 1, further comprising an opening and closing unit that opens and closes the solid discharge portion.

3. The separation device according to Claim 1 or 2, wherein the discharge port is a slit formed in the inner tubular portion.

4. The separation device according to any one of Claim 1 to Claim 3, wherein the inner tubular portion further includes a fluid flow port that is separated from the discharge port and the inner inflow port in the axial direction, allows the inside and the outside of the inner tubular portion to communicate with each other, and causes the fluid flowing into the inside of the inner tubular portion to flow out to the outside of the inner tubular portion and the inside of the outer tubular portion.

5. The separation device according to Claim 4, further comprising a prevention unit that prevents the solid discharged from the discharge port between the inner tubular portion and the outer tubular portion from flowing toward the fluid outflow port.

6. The separation device according to Claim 5, wherein the prevention unit includes a partition plate disposed at a position between the inner tubular portion and the outer tubular portion as viewed in the axial direction and at a position between the fluid flow port and the discharge port of the inner tubular portion in the axial direction.

7. The separation device according to any one of Claim 1 to Claim 6, further comprising an inflow tubular portion that guides the fluid from an outside to an inside of the casing.

8. The separation device according to Claim 7, wherein
the outer tubular portion has a bottomed cylindrical shape having a circular inner peripheral shape, and
the inflow tubular portion protrudes in a direction along a tangential direction of an inner peripheral surface of the outer tubular portion as viewed in the axial direction.

9. The separation device according to Claim 7 or Claim 8, wherein a distance between the solid discharge portion and the inflow tubular portion is shorter than a distance between the solid discharge portion and the fluid outflow port in a direction along the axial direction.

10. The separation device according to any one of Claim 1 to Claim 9, further comprising an outflow tubular portion including an internal space communicating with the fluid outflow port and protruding from an outer peripheral surface of the outer tubular portion.

11. A separation system comprising:
the separation device according to any one of Claim 1 to Claim 10; and
a drive device that rotationally drives the rotating body.
